# EUROPEAN PATENT SPECIFICATION

(11) **EP 2 495 376 B1**
(45) Date of publication and mention of the grant of the patent: **18.09.2013**
(21) Application number: 11157018.0
(22) Date of filing: 04.03.2011
(51) Int. Cl.: E04B 5/48, E04C 2/52, F24D 5/10, E04B 5/12, E04B 5/43, E04C 2/32, E04C 2/34, E04C 2/38, F24D 5/08, F24F 12/00

(54) **Intermediate floor and method for circulating air in intermediate floor**
Zwischendecke und ein Verfahren zum Zirkulieren von Luft in der Zwischendecke
Plancher intermédiaire et procédé pour faire circuler l'air dans ce plancher intermédiaire

(43) Date of publication of application: 05.09.2012
(73) Proprietor: Peljo, Martti, 02600 Espoo (FI)
(72) Inventor: Peljo, Martti, 02600 Espoo (FI)
(74) Representative: Vanhala, Jorma Kalevi

(56) References cited:
- WO-A1-91/07557
- WO-A1-99/63179
- US-A- 1 974 767
- US-A- 4 977 714

## Description

The invention relates to an intermediate floor, in which there is a surface slab, under which surface slab there is a first edge hollow, a second edge hollow and at least one intermediate hollow between the first and the second edge hollow, which edge hollows and intermediate hollows are substantially parallel and adjacent hollows have a shared dividing wall, which dividing wall has a first edge, from which it is attached to the surface slab. The invention relates also to a method for circulating air in an intermediate floor.

Heating energy can be distributed to the areas of dwelling of the buildings through base and intermediate floors. In addition to electric heating cables and hot water based heating pipes placed in the intermediate floor, also air can be used as a medium to transfer heat in the slabs. An air heated floor or intermediate floor is suited well in addition to conventional buildings also to low energy and passive houses which require very little heating energy.

From reference publication WO 91/07557 an intermediate floor structure is known, comprising two corrugated metal sheets placed on top of and connected rigidly to each other. The directions of the grooves of the corrugated sheets are at an angle, preferably at right angle in respect of each other so that the grooves of the first corrugated sheet are connected to several grooves of the second corrugated sheet. There is a heat storing layer on top of the upper corrugated sheet that can be for example a concrete slab cast in situ. The grooves below the upper corrugated sheet function as a dividing profile for the warm air to be led inside the intermediate floor structure. Grooves of the lower corrugated sheet on the edges of the intermediate slab function as channels through which warm air is led to the grooves of the upper corrugated sheet from one edge of the slab and is exhausted cooled from the other edge of the slab.

One disadvantage of the solution described in publication WO 91/07557 is that there is always an airtight metal sheet between the warm air flow channel and the concrete slab above it. Thus possible moisture in the concrete slab can in no circumstances transfer from the slab into the air flowing inside the intermediate floor structure, in other words moisture can only transfer from the slab upwards. Further disadvantage of the structure is that the concrete slab comprised has to be cast in situ, which lengthens the construction time. The structure further comprises two load-bearing corrugated sheet layers, which makes it structurally expensive. As a result of large cross-sectional area and low flow resistance of the grooves of the upper corrugated sheet air can flow freely through the shortest flow route to the grooves of the lower corrugated sheet, whereupon the air does not have to flow until the ends of the lower corrugated sheet. Thus it is virtually impossible to make the flow of the air distribute evenly throughout the whole area of the intermediate floor.

US1974767 discloses a heating system for metal buildings in which a series of parallel adjacent hollows defined by spaced webs is formed underneath a floor. Heating air can be either circulated in each hollow from one end to the opposite end thereof or, by providing openings in alternate webs near the ends thereof, air can be made to follow a circuitous path.

The aim of the invention is to present an intermediate floor and method for circulating air evenly throughout the whole intermediate floor, with which disadvantages and defects associated with the prior art can be decreased.

The objectives according to the invention are achieved with an intermediate floor and method which are characterised in what is presented in the independent claims. Some preferred embodiments are presented in the dependent claims.

The invention relates to an intermediate floor in which there is a surface slab that is defined by the area of dwelling of the building. Below the surface slab there are a first edge hollow, a second edge hollow and at least one intermediate hollow between the first and the second hollow. An intermediate floor in this connection means the area of the intermediate floor defined by the two edge hollows. The intermediate floor can thus cover one or more rooms, one or more apartments or even the entire storey. In the same intermediate floor level there can be multiple intermediate floors of the invention in parallel. The edge hollows and intermediate hollows are substantially parallel and the adjacent hollows have a shared dividing wall. These intermediate walls have a first edge, from which it is attached to the surface slab. In the intermediate floor according to the invention the intermediate hollows are substantially hermetically sealed at their ends and in said dividing walls of the adjacent hollows there are holes substantially along the whole length of the hollow. These holes form an air flow route leading from one hollow to the other. The air can thus flow through the shared dividing wall between two adjacent hollows. The size and quantity of the holes in the intermediate wall has been chosen so that the air resistance formed by them makes the flowing air to fill the hollows one by one, i.e. the air flowing in always fills at least one hollow substantially wholly before the air flows through the dividing wall into the next hollow.

In a preferred embodiment of the intermediate floor according to the invention there are holes substantially evenly along substantially the whole length of the hollow. Thanks to even placing of the holes the air can flow evenly in the intermediate floor from one hollow to the other through the dividing wall. The air is always distributed first evenly throughout the whole length of the hollow, after which air passes through the dividing wall to the next hollow. In the middle area of the intermediate floor the air flows practically wholly in a transverse direction in relation to the longitudinal direction of the hollows. The total area and form of the holes has been chosen so that desired differences in air pressure are achieved between the adjacent hollows, as a result of which an even flow from one hollow to the other is created. The total area of the holes may be for example 5-30 % or 10-20 % of the area of the shared dividing wall between the adjacent hollows. Preferably the total area of the holes is 15 % of the area of the shared dividing wall of the adjacent hollows. The flow can also be increased in desired places by changing the number and size of the holes, for example by the sides of the wall near windows.

In a second preferred embodiment of the intermediate floor according to the invention the surface slab forms at least a part of the wall of at least one hollow. This means that the air flowing in the hollow is directly in contact with the lower surface of the surface slab. The possible moisture in the surface slab can thus transfer to the air circulating in the hollows of the intermediate floor and exit from the intermediate floor together with the air.

In a third preferred embodiment of the intermediate floor according to the invention the said shared dividing walls between the adjacent hollows have a second edge, to which second edges chord planks that are substantially parallel with the longitudinal direction of the hollows are attached. The chord planks receive tensile stresses formed in the lower surface of the intermediate floor, i.e. they increase the load-bearing capacity and rigidity of the intermediate floor. A deck plank has been attached between two neighbouring chord planks to cover the gap between chord planks. The chord planks and the deck planks form therefore a unified wooden plank layer to the lower surface of the intermediate floor, which acts as a fire retarding layer in the lower surface of the intermediate floor.

A fourth preferred embodiment of the intermediate floor according to the invention comprises corrugated sheets attached rigidly to the lower surface of the surface slab. The corrugated sheets are structural elements known as such, commonly used in the intermediate floors as load-bearing structures. In this embodiment the web plates of the corrugated sheets are said shared dividing walls of the adjacent hollows. Preferably there are upper flanges and at least one lower flange in the corrugated sheets, whereupon the surface slab is attached to the upper flanges and the chord planks are attached to the lower flanges.

A fifth preferred embodiment of the intermediate floor according to the invention comprises first corrugated sheets attached rigidly to the lower surface of the surface slab, in which corrugated sheets there is at least one groove opening to towards the surface slab, and second corrugated sheets attached rigidly to the lower surface of the surface slab, in which second corrugated sheets there is at least one groove opening away from the surface slab. These second corrugated sheets overlap the first corrugated sheets at least partially.

A sixth preferred embodiment of the intermediate floor according to the invention comprises first corrugated sheets, in which there are grooves, attached rigidly to the lower surface of the surface slab and second corrugated sheets, in which there are grooves, attached underneath the first corrugated sheets. The grooves of these second corrugated sheets are substantially parallel and aligned with the grooves of the first corrugated sheets. The first and the second corrugated sheets are separated from each other with flexible dampers that decrease the transfer of vibration of the intermediate floor from the first corrugated sheets to the second corrugated sheets, which enhances the impact sound insulating capacity of the intermediate floor. The chord planks of the intermediate floor attach to the second corrugated sheets i.e. they are not in direct contact with the first corrugated sheets.

In a preferred embodiment of the intermediate floor according to the invention the surface slab is a concrete slab. Concrete has a high specific heat capacity, so it acts as a part of the intermediate floor that stores heat energy well. Thanks to high compression strength and rigidity of the concrete slab, adequate load-bearing capacity and sound insulating capacity for the intermediate floor is easily achieved. The thickness of the concrete slab can be selected according to construction engineering requirements, sound insulating requirements or other requirements suitably. The suitable thickness of the concrete slab can thus be 4-15 cm depending on the use. In yet another preferred embodiment of the intermediate floor according to the invention, the dividing walls of the hollows are attached to the surface slab with an attachment that forms a composite effect. The dividing walls and the surface slab function thus as a composite structure, which increases the bearing capacity of the structure.

In yet another preferred embodiment of the intermediate floor according to the invention there is a feeding hole for the inward flow of air in the first edge hollow and an exhaust hole for the outward flow of air in the second edge hollow. Feeding holes and exhaust holes can be at the ends of the edge hollows or they can open to the through the wall of the hollow to the upper surface or the lower surface of the intermediate floor. In the first edge hollow there can be more than one feeding hole and likewise in the second edge hollow there can be more than one exhaust hole.

In a method according to the invention air is circulated in the intermediate floor, in which there is a first edge hollow, a second edge hollow and at least one intermediate hollow between the first and the second edge hollow. The edge hollows and the intermediate hollows are substantially parallel and adjacent hollows have a shared dividing wall. In the method air is led inside the intermediate floor into the first edge hollow and out of the intermediate floor from the second edge hollow. The basic idea of the method is that inside the intermediate floor air is led from a hollow to the adjacent hollow through a shared dividing wall substantially throughout the whole length of the hollow. The air can freely fill one hollow at a turn, after which the air that is evenly distributed throughout the hollow is discharged further evenly to the next hollow through the holes in the dividing wall of the hollows. The movement of the air through the dividing walls is a result of a difference in air pressure between the adjacent hollows, which difference is caused by blowing air inside one of the hollows or by sucking air out from another hollow. The flow of the air in the middle area of the intermediate floor thus takes place substantially wholly in a transverse direction in relation to the longitudinal direction of the hollows.

In a preferred embodiment of the method according to the invention warm air is circulated in the intermediate floor to warm an area of dwelling that is defined by the intermediate floor. Warm air in this connection means air that has a higher temperature than the current temperature of the area of dwelling at the time of the heating. Since the whole intermediate floor of the area of dwelling functions thus as a "heating element", the temperature of the circulated air can be considerably lower than in the known heating systems. For heating purposes the air temperature can be for example 24-30 ºC.

In another preferred embodiment of the method according to the invention cool air is circulated in the intermediate floor to cool the area of dwelling defined by the intermediate floor. Cool air means in this connection air that has a lower temperature than the current temperature of the area of dwelling at the time of the cooling. Especially during the summer time the inside temperatures of the buildings can occasionally rise above the outside temperature. Then the areas of dwelling can be cooled by circulating cool air in the intermediate floor. For cooling purposes the temperature of air circulated in the intermediate floor can be for example 14―20 ºC. The air can thus be mechanically cooled air or cool outdoor air.

An advantage of the method according to the invention is that it can be used to heat a building and dry an intermediate floor immediately after the installation of the intermediate floor i.e. already during the construction phase.

An additional advantage of the method according to the invention is that for heating purposes the temperature of the air circulated in the intermediate floor can be low, which enables the use of heat pumps with effective efficiencies in heating air.

Further advantage of the method according to the invention is that it enables easy distribution of heat produced with several different heat sources, for example with air-circulation fireplaces, evenly throughout the areas of dwelling of the building.

Yet a further advantage of the method according to the invention is that it dries the intermediate floor continuously during the use and thus prevents the generation of moisture damage in the intermediate floor.

Further advantage of the method according to the invention is that thanks to the low temperature of the air circulated in the intermediate floor the heat can transfer from the possible warmer areas of the intermediate floor into the air circulating in the intermediate floor. The method thus functions as an equaliser of the temperature of the intermediate floor.

An advantage of the intermediate floor according to the invention is that it can be made as a prefabricated structure, which shortens the construction time.

An additional advantage of the intermediate floor according to the invention is that it is maintenance free and it does not get damaged or cause further damages because of holes occurring in or nails possibly hitting the hollows of the intermediate floor.

In the following the invention is described in detail. In the description a reference is made to the enclosed figures, in which
- Fig. 1a: presents by way of example an intermediate floor according to the invention as a cross-sectional figure,
- Fig. 1b: presents a corrugated sheet used in the intermediate floor of Fig. 1 a,
- Fig. 1c: presents by way of example an intermediate floor according to the invention as seen from above,
- Fig. 1d: presents by way of example a joint between two parallel slab elements as a cross-sectional figure,
- Fig. 1e: presents by way of example a joint between a slab element and load-bearing wall line as a cross-sectional figure,
- Fig. 2a: presents by way of example a preferred embodiment of the intermediate floor according to the invention as a cross-sectional figure,
- Fig. 2b: presents by way of example a corrugated sheet belonging to the intermediate floor of Figure 2a as a cross-sectional figure,
- Fig. 2c: presents by way of example a second preferred embodiment of the intermediate floor according to the invention as a cross-sectional figure,
- Fig. 2d: presents by way of example a corrugated sheet belonging to the intermediate floor of Figure 2c as a cross-sectional figure,
- Fig. 2e: presents by way of example a third preferred embodiment of the intermediate floor according to the invention as a cross-sectional figure,
- Fig. 2f: presents by way of example corrugated sheets belonging to the intermediate floor of Figure 2e as cross-sectional figures,
- Fig. 3a: presents by way of example a fourth preferred embodiment of the intermediate floor according to the invention as a cross-sectional figure,
- Fig. 3b: presents by way of example corrugated sheets belonging to the intermediate floor of Figure 3a as cross-sectional figures,
- Fig. 3c: presents by way of example a fifth preferred embodiment of the intermediate floor according to the invention as a cross-sectional figure,
- Fig. 3d: presents by way of example corrugated sheets belonging to the intermediate floor of Figure 3c as cross-sectional figures,
- Fig. 3e: presents by way of example a sixth preferred embodiment of the intermediate floor according to the invention as a cross-sectional figure,
- Fig. 3f: presents by way of example metal profiles belonging to the intermediate floor of Figure 3e as cross-sectional figures and
- Fig. 3g: presents by way of example a seventh preferred embodiment of the intermediate floor according to the invention as a cross-sectional figure.

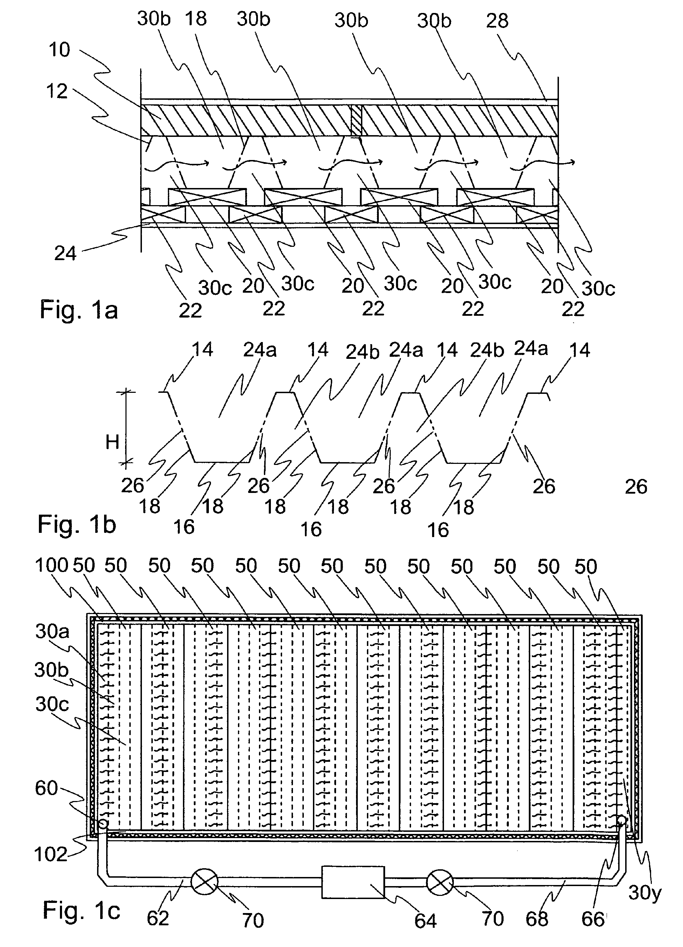

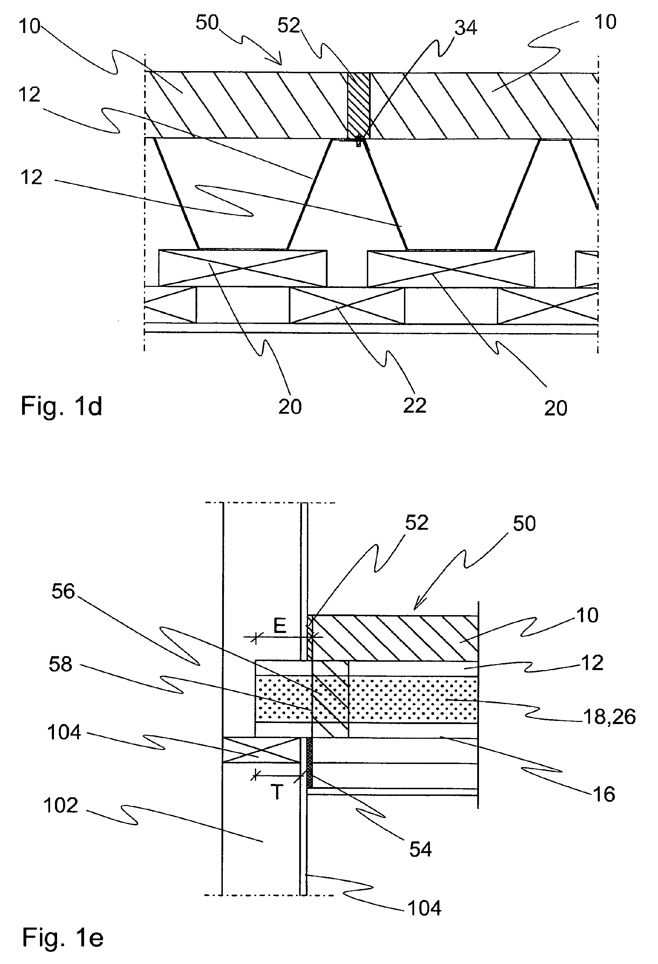

An intermediate floor according to the invention is presented by way of example in Figure 1 as a cross-sectional figure. In the intermediate floor there is a concrete slab 10, on the lower surface of which a corrugated sheet 12 has been attached. The corrugated sheet has a so-called trapezoidal cross section, in other words in it can be distinguished a set of rectangular upper flanges 14 on the first level, a set of lower flanges 16, that are parallel with the upper flange, on the second level and a set of web plates 18, that are in a oblique position, connecting the upper flanges and the lower flanges. There is a set of parallel grooves 24a, 24b (Figure 1 b) in the longitudinal direction of the corrugated sheet between the web plates. The corrugated sheet is attached from its upper flanges with mechanical fastening organs to the lower surface of the concrete slab so that to the joining point a joint that transfers shearing stresses is formed. The mechanical fastening organs can be nails, screws or bolts, spikes stamped to the upper flange or other formed parts of the edge of the upper flange made to the upper flange and protruding inside the concrete slab. The concrete slab and the corrugated sheet form thus together a load bearing composite structure.

To each lower flange of the corrugated sheet a wooden chord plank 20, with substantially the length of the whole corrugated sheet, is fastened with mechanical fastening organs, preferably with screws in the direction of the grooves of the corrugated sheet. The cross section of the chord planks is determined by the geometry of the corrugated sheet and the fire resistance requirement of the intermediate floor. The cross section of the chord plank can thus be for example 25*225 mm² or 50*225 mm². The mechanical fastening between the corrugated sheet and the chord plank is dimensioned so that the corrugated sheet and the chord plank function as a composite structure i.e. in the finished intermediate floor the tensile stresses formed to the lower flanges of the corrugated sheet transfer through the mechanical fastening to the chord planks. The chord planks increase thus the rigidity of the composite structure formed by the concrete slab and the corrugated sheet.

The width of the chord planks is dimensioned so that a gap remains between the parallel chord planks. A deck plank 22 is attached at every gap so that the deck plank is placed from its first edge overlapping the first chord plank 20 that is on the first edge of the gap and from its second edge overlapping the second chord plank on the second edge of the gap. The deck plank covers thus the gap between the chord planks wholly. The overlapping of the planks is done in order to achieve a continuous fire protection to the lower surface of the intermediate floor also at the joints. The deck planks are fixed from their edges to the chord planks with mechanical fastening organs, such as nails or screws. The cross section of the deck planks can be for example 25*150 mm² or 50*150 mm². The chord planks can be joined also with butt joints, whereupon no deck planks at all will be needed in the structure. The joint between the chord planks must in that case be fireproofed with for example fireproof paint.

Inside the intermediate floor there is a set of parallel hollows. The wall of the first hollows 30b is formed by web plates 18, the lower surface of the concrete slab 10 and the lower flange 16 of the corrugated sheet. The walls of the second hollows 30c are formed by the web plates of the corrugated sheet, the upper flange 14, and chord and deck planks 20, 22. The first and second hollows are situated alternately abreast so that the web plate 18 between two parallel hollows forms a shared dividing wall separating the hollows.

In Figure 1b a corrugated sheet 12 used in the intermediate floor of Figure 1a is presented by way of example. The corrugated sheet is a part produced by forming a steel sheet, in which part there are three grooves 24a, defined by the web plates 18 and lower flanges 16, opening towards the first direction (upwards in Figure 1 b) and two grooves 24b, defined by the web plates and the upper flange, opening to the second direction (downwards in Figure 1 b). The width of the upper flanges is substantially smaller than the width of the lower flanges. The thickness and cross-sectional dimensions of the corrugated sheet are determined by the span length and load of the intermediate floor. The height H of the corrugated sheet i.e. the perpendicular distance between the level determined by the upper flanges and level determined by the lower flanges can be for example 150-180 mm. With conventional loads and dimensions of residential buildings the thickness of the corrugated sheet is typically between 0.5-2.5 mm.

All web plates are perforated by holes 26 placed in the lateral direction in the middle area of the web plate (Figure 1 e). Holes 26 form flow routes through which air can flow from the first hollow 30b through the web plate 18 into the adjacent second hollow 30c and further through the web plate into the next first hollow (Figure 1a). In the intermediate floor according to the invention air flows therefore from one hollow to the next through the shared dividing wall between the hollows i.e. through the web plate. The size, number and total area of the holes can be chosen in order to achieve a suitable flow distribution. In the intermediate floor described in Figures 1a-1e there are holes in the web plate with even spaces substantially throughout the whole length of the web plate, in other words from the first end of the web plate to the second end of the web plate. The total area of the holes can be for example 10-20 % of the area of the web or 5-30 % of the area. Preferably the area of the holes is substantially 15 % of the area of the web. The size and shape of the holes can be chosen. Preferably the holes are round holes with a diameter of 3 mm.

There is a floor covering 28 on the upper surface of the concrete slab, which can be for example sheet vinyl flooring, parquet flooring or tiling. On the lower surface of the flange planks there is an interior lining 24, which can be for example of plaster board.

The intermediate floor according to the invention can be manufactured as an prefabricated structure made of several slab elements placed side by side. An individual slab element is manufactured at the prefabrication factory so that a concrete slab 10 of the slab element is first cast in a suitable casting mould. Immediately after the casting of the concrete, a corrugated sheet is placed on top of the fresh, still soft concrete, on the upper flange of which corrugated sheet there are mechanical fastening means to be submerged into the concrete slab. After the concrete has hardened, the corrugated sheet and the concrete slab function as a composite structure. Finally chord planks are attached to the lower flanges of the corrugated sheet and deck planks are attached to the chord planks, after which the slab element is ready to be delivered to the building site.

An intermediate floor according to the invention is presented in Figure 1c by way of example as illustrated from above. The intermediate floor is formed out of a set of slab elements 50 placed side by side, which slab elements are supported from their first end to the first load-bearing wall line 100 of the building and from their second end to the second load-bearing wall line 102 of the building. As many slab elements as the width of the intermediate floor requires are installed side by side. If the width of the intermediate floor is not divisible by the width of an individual slab element, one or several narrower slab elements can be used in the intermediate floor. The possible narrower slab elements can be placed at the edges of the intermediate floor. The parallel slab elements are attached from their edges rigidly to each other, whereupon the whole intermediate floor is formed into a continuous rigid slab.

A joint between two parallel slab elements 50 is presented in Figure 1d by way of example. On the longitudinal edges of the slab element, the edge parts of the corrugated sheet 12 extend slightly outside the area defined by the edges of the concrete slab. The slab elements are placed in the intermediate floor so that the edge parts of the corrugated sheets of the adjacent slab elements place themselves overlapping. The adjacent slab elements are attached to each other with mechanical fastening organs that attach edge parts to each other, preferably with self-drilling screws 34. The gap remaining between the adjacent concrete slabs is filled with joint grouting 52. On the lower surface of the intermediate floor the gap between the adjacent flange planks 20 is covered with a deck plank 22.

The resting of the slab element 50 on the load-bearing wall line 102 is presented in Figure 1e by way of example as a cross-sectional figure. The slab elements are set so that the on the ends of the element the lower flanges 16 of the corrugated sheets 12 place themselves on top of the upper surface of the supporting structure below. The support structure below in Figure 1e is a timber-framed wall and especially an upper guiding beam 104. The length of the part of the corrugated sheet that extends over the upper guiding beam or in other words the length of the so-called supporting surface T is determined according to construction plans. The slab elements are manufactured so that the length of the corrugated sheets 12 is greater than the length 10 of the concrete slab and the length of the flange and deck planks 20, 22. At the ends of the slab element the end of the corrugated sheet extends thus a distance E outwards from the level of the end edge of the concrete slab and end surfaces of the chord and deck planks. This distance E is slightly greater than the length T of the support surface determined by the construction plans, so a gap remains between the end edge of the concrete slab and the inner surface 104 of the load bearing wall line. This gap is filled with joint grouting 52. Below the slab, the gap forming between the end surfaces of the chord and deck planks and the inner surface 104 of the wall line is filled with joint paste 54. There is an end plug 56 on both ends of the slab element 50, which plug closes the ends of the hollows 30b, 30c substantially hermetically. The end plugs thus prevent air from flowing out of the hollows through the ends of the slab elements. Air can thus flow from one hollow to the other only through holes 26 in the web plate 18. The end plugs are installed into the ends of the slab elements so that their outer edge surface 58 is placed substantially on the same level with the end edge of the concrete slab. The end plugs can be for example of plastic, cellular plastic, urethane, or concrete material.

The load bearing wall line presented in Figure 1e is a frame structured wooden wall. It is obvious that the invention is not restricted to be used only in connection with these wall structures, but the load-bearing wall line can also be some other load-bearing structure that bears overhead stresses, such as stone structured cast or masonry wall or a load-bearing beam. In connection with stone structured walls, a second stage concrete is cast to the ends of the elements after the slab elements are installed, which closes the ends of the hollows 30a, 30b substantially hermetically.

The flow of air in an intermediate floor according to the invention is presented in Figure 1 c. On the first edge of the intermediate floor there is feeding hole 60 opening inside the first edge hollow 30a, which feeding hole is connected with a feeding tube 62 to the heat exchanger 64. In a method according to the invention air is blown from the heat exchanger a blower 70 comprised in the exchanger into the first edge hollow 30a on the first edge of the intermediate floor. The air blown inside the hollow fills first the edge hollow completely, whereupon inside this hollow, a greater air pressure than in the adjacent intermediate hollow 30b is formed. As a result of the pressure difference air flows from the first edge hollow through the holes 26 of the web plate 18 into the first intermediate hollow 30b. Because of the small area and even placing of the holes 26 the flow of air through the holes happens evenly throughout the whole length of the hollows. When air flows into the first intermediate hollow, an air pressure difference develops between this hollow and the intermediate hollow next in order. Because of this pressure difference air flows again from the first intermediate hollow into the second intermediate hollow 30c through the holes in the web plate. The flow of the air continues respectively throughout the whole length of the intermediate floor until air arrives into the second edge hollow 30y on the second edge of the slab. In this edge hollow of the second edge there is an exhaust hole 66, through which air is able to flow out of the hollow. As an extension of the exhaust hole there is a return pipe 68, the second end of which has been connected to the heat exchanger 64.

In the method according to the invention the intermediate floor can be used according to need either to heat or cool the area of dwelling defined by the slab. For heating purposes air that is warmer than the current temperature of the area of dwelling is fed into the intermediate floor from the heat exchanger. For heating purposes the whole intermediate floor of the area of dwelling functions as a heat source, so for heating purposes the temperature of the intermediate floor needs to be only slightly higher than the target temperature of the area of dwelling. For heating purposes the temperature of the air flowing inside the intermediate floor can be for example 24―30 ºC. Temperature this low can be produced economically for example with air source heat pumps or ground source heat pumps. Respectively for cooling purposes air that is cooler than the current temperature of the area of dwelling is led into the intermediate floor from the heat exchanger.

In Figure 1c the blower 70 is between the heat exchanger and the feeding hole 60 or in other words an overpressure is produced with the blower into the first edge hollow 30a of the intermediate floor. The blower can be placed also into the return pipe 68 between the exhaust hole 66 and heat exchanger. Then air is sucked with the blower from inside the intermediate floor i.e. an underpressure is created into the edge hollow 30y of the second edge of the intermediate floor, which makes air flow through the walls of the hollows from the first edge of the slab towards the second edge. In a method according to the invention air pressure inside the intermediate floor is therefore lower than the air pressure prevailing in the area of dwelling. The advantage of flow caused by underpressure is that air can never flow from inside the intermediate floor into the area of dwelling, even though there would be holes or gaps opening to the area of dwelling in the hollow of the intermediate floor. Thus the air flowing in the intermediate floor is not able to mix with the indoor air, but the flow can be executed in practice as a closed circulation.

In order to arrange the flow of the air, also two blowers can be used in the system, with one of which air is blown inside the slab from the first edge and with the other of which air is sucked out from the second edge of the slab. The function of the blowers has to thus be sized so that the air pressure prevailing inside the intermediate floor is constantly lower than the air pressure of the area of dwelling.

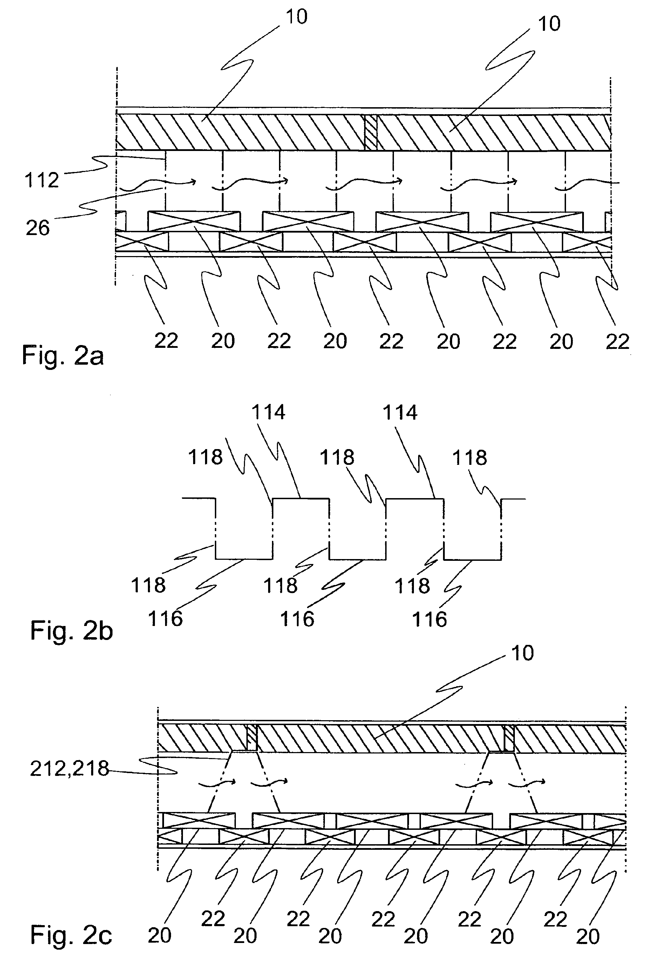

A preferred embodiment of an intermediate floor and a corrugated sheet used in the intermediate floor according to the invention is presented in Figures 2a and 2b by way of example as cross-sectional figures. This preferred embodiment of the invention differs from the invention described in Figures 1a-1e only with regard to the profile shape of the corrugated sheet 112. In this embodiment the upper flanges 114 and the lower flanges 116 of the corrugated sheet have the same width with each other and the web plates 118 are in right angle in relation to the level of the upper flanges and the lower flanges. The cross-sectional measurements of the corrugated sheet i.e. the width of the upper and lower flanges and the height of the corrugated sheet are determined according to the constructions plans. In the web plate there are holes 26 with a diameter of 3 mm throughout the whole length of the web plate. Preferably the area of the holes is approx. 15 % of the area of the web. The corrugated sheets are attached from the upper flanges with mechanical fastening organs to the concrete slab 10 and to the lower flanges of the corrugated sheets chord planks 20 are attached and to them deck planks 22 in a way described in the description of Figures 1a-1e.

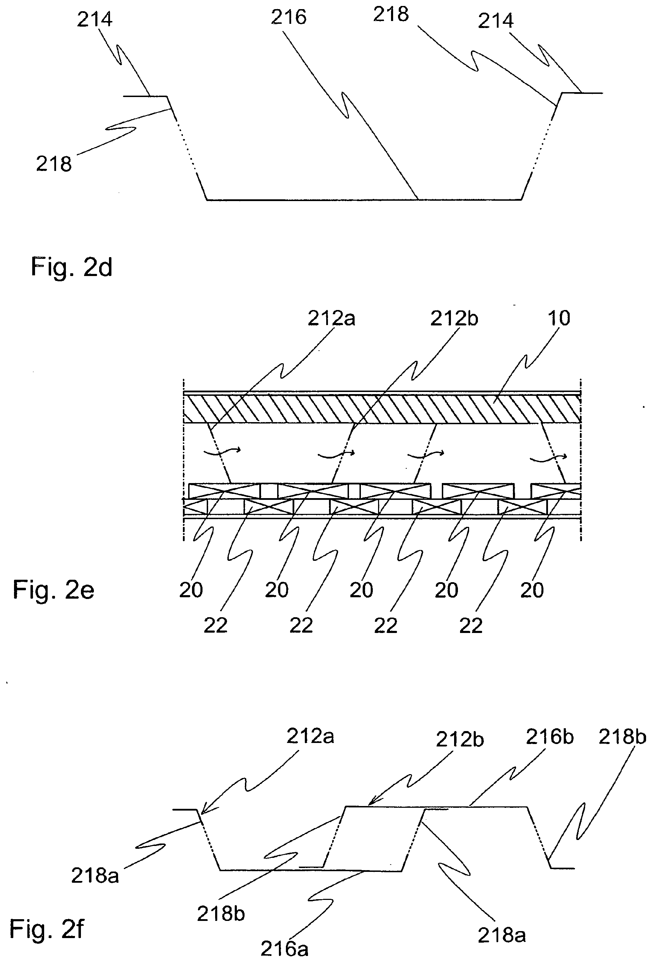

A second preferred embodiment of an intermediate floor and a corrugated sheet used in the intermediate floor according to the invention is presented in Figures 2c and 2d by way of example as cross-sectional figures. Also this preferred embodiment of the invention differs from the invention described in Figures 1a-1e only with regard to the profile shape of the corrugated sheet 112. In this embodiment the corrugated sheet is a continuous part formed out of a steel sheet, in which part there can be distinguished two upper flanges 214, that are situated on the opposite edges of the corrugated sheet, one lower flange 216 that is parallel with the upper flanges and two web plates 218 that are in an oblique position in relation to the upper flanges and the lower flange. The lower flange joins from a first edge with a first web plate to a first upper flange and from its second edge with a second web plate to a second upper flange. The width of the lower flange is substantially greater than the width of the upper flange. There are holes in the web plates substantially throughout the whole length of the web plate. Preferably the holes have a diameter of 3 mm and their total area is approx. 15 % of the area of the web. The corrugated sheets are attached from their upper flanges with mechanical fastening organs to the concrete slab 10 and to the lower flanges of the corrugated sheets chord planks are attached and to them are attached the deck planks in a way described in the description of Figures 1a-1e. Because of the great width of the lower flange, three chord planks 20 are attached to one lower flange.

A third preferred embodiment of an intermediate floor and a corrugated sheet used in the intermediate floor according to the invention is presented in Figures 2e and 2f by way of example as cross-sectional figures. The corrugated sheets 212 used in this embodiment of the intermediate floor are identical to those presented in the description of Figures 2c and 2d, but they are placed in the intermediate floor differently. A first corrugated sheet 212a is set to its place so that its groove defined by web plates 218a and a lower flange 216a opens upwards towards the concrete slab 10. This corrugated sheet is attached from its upper flanges to the concrete slab with mechanical fastening organs. A second corrugated sheet set alongside the first corrugated sheet is set to its place so that its groove defined by web plates 218b and a lower flange 216b opens downwards i.e. away from the concrete slab. The second web plate and the second upper flange of this second corrugated sheet are in the area between the web plates of the first corrugated sheet i.e. the corrugated sheets overlap each other. The second corrugates sheet is attached from its bottom plate rigidly to the concrete slab with mechanical fastening organs in a previously described way. A particular advantage of this embodiment is that the slab element can easily be made with the desired width by regulating the width of the part of the overlapping corrugated sheets. In this embodiment the width of the slab element is thus not determined by the width of the corrugated sheet. The chord planks 20 and the deck planks 22 are attached to their places in a previously described way.

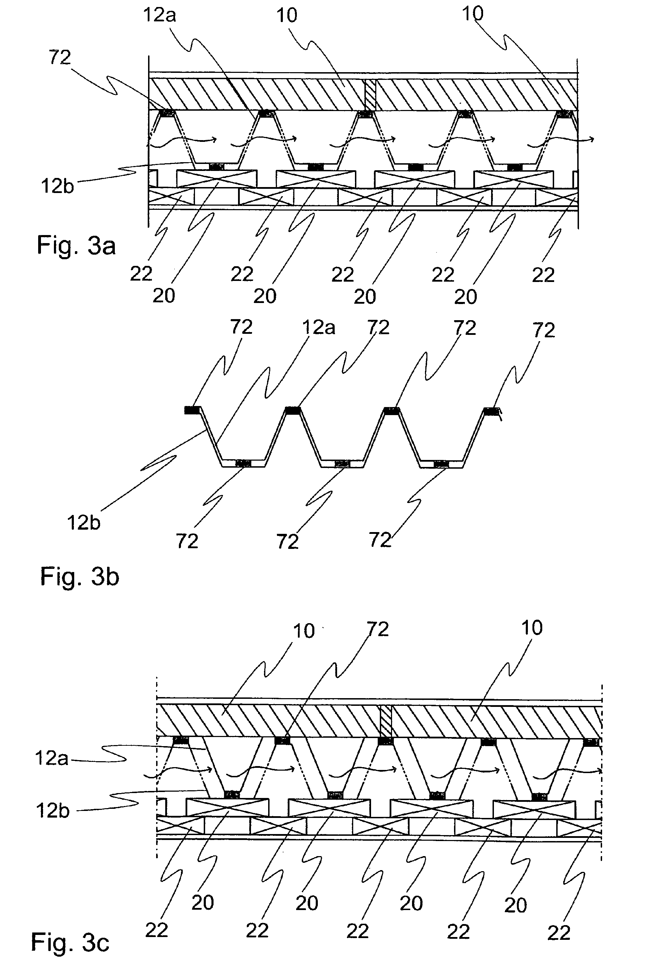

A fourth preferred embodiment of an intermediate floor and a corrugated sheet used in the intermediate floor according to the invention is presented in Figures 3a and 3b by way of example as cross-sectional figures. The corrugated sheets 12 used in this embodiment of the intermediate floor are identical to those presented in the description of Figures 1a-1e, but now the corrugated sheet are placed on top of each other in two layers. The corrugated sheets 12a of the first layer are set on their places in a similar manner as in Figures 1a-1e i.e. they attach from their upper flanges to the concrete slab 10 with mechanical fastening organs. Below the first corrugated sheets there are placed second corrugated sheets 12b so that the grooves of the corrugated sheet place themselves aligned in a parallel direction. The first and the second corrugated sheets are separated from each other with flexible, striplike dampers 72 placed between their upper flanges 14 and lower flanges 16. The material and cross-sectional size of the dampers can be chosen on the basis of the geometry, manufacturing or installation technical factors of the corrugated sheets. The dampers can be for example rubber strips with a cross-sectional size of 20*50 mm². The chord planks are attached with mechanical fixing organs to the lower flanges of the second corrugated sheets. Because of the dampers the vibrations of the concrete slab dampen when they transfer from the corrugated sheets of the first layer to the corrugated sheets of the second layer. A particular advantage of this embodiment is in fact improved impact sound insulating capacity because of the dampening of the vibrations.

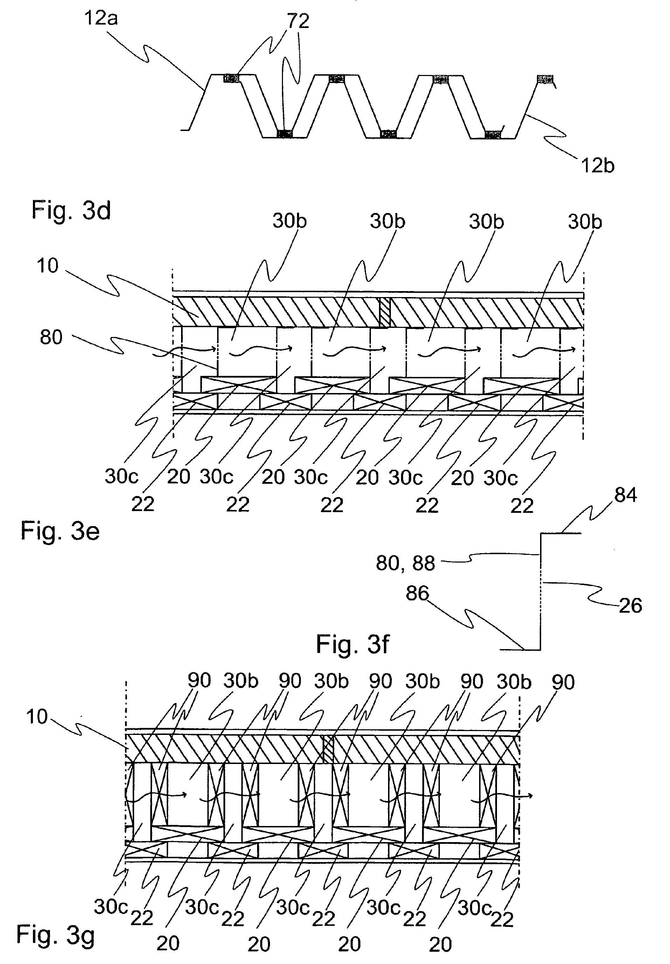

A fifth preferred embodiment of an intermediate floor and a corrugated sheet used in the intermediate floor according to the invention is presented in Figures 3c and 3d by way of example as cross-sectional figures. The corrugated sheets 12 used in this embodiment of the intermediate floor are identical to those presented in the description of Figures 1a-1e, 3a and 3b, but they are placed in the intermediate floor differently. The corrugated sheets 12a of the first layer are now set in their place so that they attach from their lower flanges to the concrete slab 10 with mechanical fastening organs. The first corrugated sheets are thus attached to the concrete slab in an inverted position. The second corrugated sheets 12b are attached below the first corrugated sheets so that the upper flanges 14 of the second corrugated sheets place themselves abreast with the lower flanges 16 of the first corrugated sheets. Correspondingly the upper flanges of the first corrugated sheets place themselves abreast with the lower flanges of the second corrugated sheets. The first and the second corrugated sheets are separated from each other with flexible, striplike dampers 72 that are placed between the upper flanges and lower flanges that place themselves parallel. Preferably the dampers are rubber strips with a cross-sectional size of 20*50 mm². The chord planks are attached with mechanical fastening organs to the lower flanges of the second corrugated sheets in a previously described way. In this embodiment of the invention the distance between the web plates 18 of the superimposed corrugated sheets is greater than in the embodiment according to Figures 3a and 3b. The greater distance between the web plates is believed to make the flow of air through the holes of the web plate easier.

A sixth preferred embodiment of an intermediate floor and a metal profile 80 used in the intermediate floor according to the invention is presented in Figures 3e and 3f by way of example as cross-sectional figures. In this embodiment of the intermediate floor a set of beamlike metal profiles 80 are attached parallel with mechanical fastening organs to the lower surface of the concrete slab 10 at a distance from each other. The metal profiles are so-called Z-profiles manufactured by forming out of a continuous metal sheet, in which there is a web plate 88, an upper flange 84 that attaches to the first edge of the web plate, and a lower flange 86 that attaches to the second edge of the web plate. The upper flange and the lower flange are substantially parallel and substantially in a right angle in relation to the web plate. The metal profiles are attached from their first edge with mechanical fastening organs rigidly to the concrete slab 10. The lower flanges of two adjacent metal profiles are attached to each other with chord planks 20 so that the lower flange of the first metal profile attaches to the first longitudinal edge of the chord plank and the lower flange of the second metal profile attaches to the second longitudinal edge of the chord plank. The attachment of the chord planks and the lower flanges is implemented with mechanical fastening organs, such as screws. Two parallel metal profiles, the concrete slab and a chord plank form thus first hollows 30b. The placement of the metal profiles and the dimensions of the chord planks are chosen so that a gap remains between the parallel chord planks. This gap is covered with deck planks 22, which are attached from their first edge to the chord plank on the first side of the gap and from their second edge to the chord plank on the second side of the gap. Second hollows 30c defined by the metal profiles, the concrete slab and the chord planks are thus formed between the first hollows.

The web plates of the metal profiles are perforated with holes 26 placed in the mid area of the web plate in the width direction. The holes are formed to the web plates evenly spaced substantially on the whole length of the web plate or in other words from the first end of the web plate to the second end of the web plate. Preferably the holes have a diameter of 3 mm and their total area is substantially 15 % of the area of the web.

In the embodiments of the invention described above the holes of the web plates can be made by drilling, stamping or some other suitable method. In a preferred embodiment of the invention the holes are done by stamping so that in forming the hole no material of the web plate is removed, but the material displaced by the stamping tool is stretched into a cylindrical extension to the edges of the hole. A particular advantage of this embodiment is that the holes weaken the web plate less. Furthermore heat transfers more efficiently from the air circulating in the intermediate floor into the web plate.

A seventh preferred embodiment of the intermediate floor according to the invention is presented in Figure 3g by way of example as cross-sectional figures. In this embodiment a set of wooden beams 90 with a rectangular cross-section is attached to the lower surface of the concrete slab 10 with mechanical fastening organs parallel at a distance from each other. The wooden beams have a first side and a second side and two face surfaces connecting the two sides. The wooden beams are attached from their first side with mechanical fastening organs to the concrete slab 10 so that the wooden beams and the concrete slab function as a composite structure. The second sides of the two parallel wooden beams are connected to each other with chord planks 20 so that second side of the first wooden beam attaches to the first longitudinal edge of the flange plank and the second side of the second wooden beam attaches to the second longitudinal edge of the chord plank. Two parallel wooden beams, the concrete slab and the chord plank form thus first hollows 30b on the direction of the wooden beams. The gap between the parallel chord planks is covered with deck planks 22 that are attached from their first edge to the chord plank on the first side of the gap and from their second edge to the chord plank on the second side of the gap. Between the first hollows are thus formed second hollows 30c defined by the wooden beams, the concrete slab and the deck planks. The attachment of the chord planks to the wooden beams is implemented with mechanical fastening organs, such as screws or nails.

In the mid area of the face surfaces of the wooden beams there are holes through the wooden beam (the holes are not presented in the figure). The holes are formed to the face surfaces evenly spaced substantially along the whole length of the beam or in other words from the first end of the beam until the second end of the beam. Preferably the total area of the holes is substantially 15 % of the area of the web. The size of the holes can be chosen suitably. In Figure 3g the wooden beams are solid wood. It is obvious to a skilled person that instead of solid wooden beams other beams manufactured substantially of wood material can also be used, such as laminated beams, glued laminated beams or web plated beams.

Some preferred embodiments of the method and intermediate floor according to the invention are described above. The invention is not restricted to the solutions presently described but the inventive idea can be applied in different ways within the limits set by the claims.

## Claims

1. Intermediate floor, in which there is a surface slab (10), below which surface slab there is a first edge hollow (30a), a second edge hollow (30y) and at least one intermediate hollow (30b, 30c) between the first and the second edge hollow, which edge hollows and intermediate hollows are substantially parallel and adjacent hollows have a shared dividing wall (18, 88, 90, 118, 218), which dividing wall has a first edge, from which it is attached to the surface slab, **characterised in that** both opposite free ends of at least said intermediate hollows are substantially closed hermetically and holes (26) are provided in said dividing walls of the adjacent hollows substantially along the whole length of the hollow in order to form a flow route of air from one hollow to the other.

2. Intermediate floor according to claim 1, **characterised in that** said holes (26) are substantially evenly spaced throughout the whole length of the hollow (30a, 30b, 30c, 30y).

3. Intermediate floor according to claim 1 or 2, **characterised in that** the total area of the said holes (26) is 5-30 %, preferably 10-20%, most preferably 15 % of the area of the shared dividing wall (18, 88, 90, 118, 218) of the adjacent hollows (30a, 30b, 30c, 30y).

4. Intermediate floor according to any of claims 1-3, **characterised in that** the surface slab (10) forms at least a part of a wall of at least one hollow (30a, 30b, 30c, 30y).

5. Intermediate floor according to any of claims 1-4, **characterised in that** said shared dividing walls (18, 88, 90, 118, 218) of the adjacent hollows (30a, 30b, 30c, 30y) have a second edge, to which second edges chord planks (20), that are substantially in the longitudinal direction of the hollow, are attached and a deck plank (22) is attached between two adjacent chord planks to cover the gap between the chord planks.

6. Intermediate floor according to any of claims 1-5, **characterised in that** it comprises corrugated sheets (12, 112, 212) attached rigidly on the lower surface of the surface slab (10), in which corrugated sheets there are web plates (18), which web plates are said shared dividing walls (18, 118, 218) of the adjacent hollows (30a, 30b, 30c, 30y).

7. Intermediate floor according to claim 6, **characterised in that** the corrugated sheets (12, 112, 212) have upper flanges (14, 114, 214) and at least one lower flange (16, 116, 216), whereupon the surface slab (10) is attached to the upper flanges and the chord planks (20) are attached to the lower flanges.

8. Intermediate floor according to claim 6 or 7, **characterised in that** it comprises first corrugated sheets (212a) attached rigidly to the lower surface of the surface slab (10), in which there is at least one groove opening towards the surface slab and second corrugated sheets (212b) attached rigidly to the lower surface of the surface slab (10), in which there is at least one groove opening away from the surface slab and which second corrugated sheets at least partially overlap the first corrugated sheets.

9. Intermediate floor according to claim 6 or 7, **characterised in that** it comprises first corrugated sheets (12a) attached rigidly to the lower surface of the surface slab (10), in which corrugated sheets there are grooves (24a, 24b), and second corrugated sheets (12b) attached below the first corrugated sheets, in which second corrugated sheets there are grooves (24a, 24b), the grooves of which second corrugated sheets are substantially parallel and aligned with the grooves of the first corrugated sheets, whereupon the first and second corrugated sheets are separated from each other by flexible dampers (72) and the chord planks (20) attach to the second corrugated sheets.

10. Intermediate floor according to any of claims 1-9, **characterised in that** the surface slab (10) is a concrete slab.

11. Intermediate floor according to any of claims 1-10, **characterised in that** the dividing wall (18, 88, 90, 118, 218) is attached to the surface slab (10) with an attachment that forms a composite effect.

12. Intermediate floor according to any of claims 1-11, **characterised in that** in the first edge hollow (30a) there is a feeding hole (60) for the inflow of air and in the second edge hollow (30y) there is a exhaust hole (66) for the outflow of air.

13. Method for circulating air in an intermediate floor, in which there is a first edge hollow (30a), a second edge hollow (30y) and at least one intermediate hollow (30b, 30c) between the first and the second hollow, which edge hollows and intermediate hollows are substantially parallel and adjacent hollows have a shared dividing wall (18, 88, 90, 118, 218), in which method air is led inside the intermediate floor into the first edge hollow and out of the intermediate floor from the second edge hollow, **characterised in that** inside the intermediate floor, the air is led from a hollow to the adjacent hollow through holes (26) in said shared dividing walls substantially across the whole length of the hollow.

14. Method according to claim 13, **characterised in that** warm air is circulated in the intermediate floor in order to heat the area of dwelling defined by the intermediate floor.

15. Method according to claim 13, **characterised in that** cool air is circulated in the intermediate floor in order to cool the area of dwelling defined by the intermediate floor.

## Patentansprüche

1. Zwischenboden, der eine Oberflächenplatte (10) aufweist, wobei unterhalb der Oberflächenplatte ist ein erster Randhohlraum (30a), ein zweiter Randhohlraum (30y) und mindestens ein Zwischenhohlraum (30b, 30c) zwischen dem ersten und dem zweiten Randhohlraum angeordnet ist, wobei die Randhohlräume und Zwischenhohlräume im Wesentlichen parallel sind und benachbarte Hohlräume eine gemeinsame Trennwand (18, 88, 90, 118, 218) aufweisen, wobei die Trennwand einen ersten Rand aufweist, mit dem sie an der Oberflächenplatte befestigt ist, **dadurch gekennzeichnet, dass** beide gegenüberliegenden freien Enden der mindestens einen Zwischenhohlräume im Wesentlichen hermetisch geschlossen sind und in die genannten Trennwände der benachbarten Hohlräume Löcher (26) im wesentlichen über die gesamte Länge des Hohlraums angeordnet sind, um einen Strömungsweg für Luft von einem Hohlraum zum anderen zu bilden.

2. Zwischenboden nach Anspruch 1, **dadurch gekennzeichnet, dass** die genannten Löcher (26) im Wesentlichen gleichmäßig über die gesamte Länge des Hohlraums (30a, 30b, 30c, 30y) beabstandet sind.

3. Zwischenboden nach Anspruch 1 oder 2, **dadurch gekennzeichnet, dass** die Gesamtfläche der genannten Löcher (26) 5-30%, vorzugsweise 10-20%, besonders bevorzugt 15% der Fläche der gemeinsamen Trennwand (18, 88, 90, 118, 218) der benachbarten Hohlräume (30a, 30b, 30c, 30y) beträgt.

4. Zwischenboden nach einem der Ansprüche 1-3, **dadurch gekennzeichnet, dass** die Oberflächenplatte (10) zumindest einen Teil einer Wand von mindestens einem Hohlraum (30a, 30b, 30c, 30y) bildet.

5. Zwischenboden nach einem der Ansprüche 1-4, **dadurch gekennzeichnet, dass** die genannten gemeinsamen Trennwände (18, 88, 90, 118, 218) der benachbarten Hohlräume (30a, 30b, 30c, 30y) einen zweiten Rand aufweisen, wobei an die zweiten Ränder Gurtplatten (20), welche sich im Wesentlichen in longitudinaler Richtung der Hohlräume erstreckten, angeordnet sind, und wobei eine Deckplatte (22) angeordnet ist zwischen zwei benachbarten Gurtplatten, um die Lücke zwischen den Gurtplatten abzudecken.

6. Zwischenboden nach einem der Ansprüche 1-5, **dadurch gekennzeichnet, dass** er Wellplatten (12, 112, 212) umfasst, welche fest an der unteren Oberfläche der der Oberflächenplatte (10) befestigt sind, wobei die Wellplatten Stegbleche (18) aufweisen, wobei die Stegbleche die genannten Trennwände (18, 88, 90, 118, 218) der benachbarten Hohlräume (30a, 30b, 30c, 30y) bilden.

7. Zwischenboden nach Anspruch 6, **dadurch gekennzeichnet, dass** die Wellplatten (12, 112, 212) obere Flansche (14, 114, 214) und mindestens einen unteren Flansch (16, 116, 216) aufweist, wobei die Oberflächenplatte (10) an den oberen Flanschen befestigt sind und die Gurtplatten (20) an dem unteren Flansch befestigt ist.

8. Zwischenboden nach Anspruch 6 oder 7, **dadurch gekennzeichnet, dass** er erste Wellplatten (212a) umfasst, welche fest an der unteren Oberfläche der Oberflächenplatte (10) befestigt sind, worin sich mindestens eine Nut befindet, die sich zur Oberflächenplatte (10) öffnet, und zweite Wellplatten (212b) umfasst, welche fest an der unteren Oberfläche der Oberflächenplatte (10) befestigt sind, worin sich mindestens eine Nut befindet, die sich von der Oberflächenplatte (10) weg öffnet, und wobei die zweiten Wellplatten die ersten Wellplatten mindestens teilweise überlappen.

9. Zwischenboden nach Anspruch 6 oder 7, **dadurch gekennzeichnet, dass** er erste Wellplatten (12a) umfasst, welche fest an der unteren Oberfläche der Oberflächenplatte (10) befestigt sind, wobei die Wellplatten Nuten (24a, 24b) umfassen, und zweite Wellplatten (12b) umfasst, welche unterhalb der ersten Wellplatten befestigt sind, wobei die zweiten Wellplatten Nuten (24a, 24b) aufweisen, wobei die Nuten von den zweiten Wellplatten im Wesentlichen parallel und ausgerichtet sind zu den Nuten der ersten Wellplatten, wobei die ersten und zweiten Wellplatten voneinander getrennt sind durch flexible Dämpfer (72) und wobei die Gurtplatten (20) an den zweiten Wellplatten anliegen.

10. Zwischenboden nach einem der Ansprüche 1-9, **dadurch gekennzeichnet, dass** die Oberflächenplatte (10) eine Betonplatte ist.

11. Zwischenboden nach einem der Ansprüche 1-10, **dadurch gekennzeichnet, dass** die Trennwand (18, 88, 90, 118, 218) an der Oberflächenplatte (10) mit einer Befestigung angebracht ist, die eine Verbundwirkung erzeugt.

12. Zwischenboden nach einem der Ansprüche 1-11, **dadurch gekennzeichnet, dass** in dem ersten Randhohlraum (30a) ein Zugangsloch (60) für das Einströmen von Luft angeordnet ist und in dem zweiten Randhohlraum (30y) ein Ausgangsloch (66) für das Ausströmen von Luft angeordnet ist.

13. Verfahren zum Zirkulieren von Luft in einem Zwischenboden, in dem ein erster Randhohlraum (30a), ein zweiter Randhohlraum (30y) und mindestens ein Zwischenhohlraum (30b, 30c) zwischen dem ersten und dem zweiten Hohlraum vorgesehen ist, wobei die Randhohlräume und Zwischenhohlräume im Wesentlichen parallel sind und benachbart Hohlräume eine gemeinsame Trennwand (18, 88, 90, 118, 218) haben, wobei bei dem Verfahren Luft in den Zwischenboden geleitet wird in den ersten Randhohlraum und aus dem Zwischenboden heraus aus dem zweiten Randhohlraum, **dadurch gekennzeichnet, dass** im Inneren des Zwischenbodens die Luft von einem Hohlraum in den angrenzenden Hohlraum durch Löcher (26) in den genannten gemeinsamen Trennwänden im Wesentlichen über die gesamte Länge des Hohlraums geleitet wird.

14. Verfahren nach Anspruch 13, **dadurch gekennzeichnet, dass** warme Luft im Zwischenboden zirkuliert wird, um den Wohnbereich zu erwärmen, der durch den Zwischenboden definiert ist.

15. Verfahren nach Anspruch 13, **dadurch gekennzeichnet, dass** kühle Luft im Zwischenboden zirkuliert wird, um den Wohnbereich zu kühlen, der durch den Zwischenboden definiert ist.

## Revendications

1. Plancher intermédiaire dans lequel on trouve une dalle de surface (10), au-dessous de laquelle dalle de surface, on trouve un premier creux de bord (30a), un second creux de bord (30y) et au moins un creux intermédiaire (30b, 30c) entre le premier et le second creux de bord, lesquels creux de bord et creux intermédiaires sont sensiblement parallèles et des bords adjacents ont une paroi de séparation commune (18, 88, 90, 118, 218), laquelle paroi de séparation a un premier bord à partir duquel elle est fixée à la dalle de surface, **caractérisé en ce que** deux extrémités libres opposées d'au moins lesdits creux intermédiaires sont sensiblement hermétiquement fermées, et des trous (26) sont prévus dans lesdites parois de séparation des creux adjacents sensiblement le long de toute la longueur du creux afin de former une voie d'écoulement de l'air, d'un creux à l'autre.

2. Plancher intermédiaire selon la revendication 1, **caractérisé en ce que** lesdits trous (26) sont espacés sensiblement régulièrement sur toute la longueur du creux (30a, 30b, 30c, 30y).

3. Plancher intermédiaire selon la revendication 1 ou 2, **caractérisé en ce que** toute la surface desdits trous (26) représente 5-30%, de préférence 10-20%, de manière préférée entre toutes 15% de la surface de la paroi de séparation commune (18, 88, 90, 118, 218) des creux adjacents (30a, 30b, 30c, 30y).

4. Plancher intermédiaire selon l'une quelconque des revendications 1 à 3, **caractérisé en ce que** la dalle de surface (10) forme au moins une partie d'une paroi d'au moins un creux (30a, 30b, 30c, 30y).

5. Plancher intermédiaire selon l'une quelconque des revendications 1 à 4, **caractérisé en ce que** lesdites parois de séparation communes (18, 88, 90, 118, 218) des creux adjacents (30a, 30b, 30c, 30y) ont un second bord, auquel second bord, des planches de recouvrement (20) qui sont sensiblement dans la direction longitudinale du creux, sont fixées et une planche de pont (22) est fixée entre deux planches de recouvrement adjacentes pour recouvrir l'espace entre les planches de recouvrement.

6. Plancher intermédiaire selon l'une quelconque des revendications 1 à 5, **caractérisé en ce qu'**il comprend des tôles ondulées (12, 112, 212) rigidement fixées sur la surface inférieure de la dalle de surface (10), dans lesdites tôles ondulées, on trouve des tôles d'âme (18), lesquelles tôles d'âme sont lesdites parois de séparation communes (18, 118, 218) des creux adjacents (30a, 30b, 30c, 30y).

7. Plancher intermédiaire selon la revendication 6, **caractérisé en ce que** les tôles ondulées (12, 112, 212) ont des brides supérieures (14, 114, 214) et au moins une bride inférieure (16, 116, 216), suite à quoi, la dalle de surface (10) est fixée sur les brides supérieures et les planches de recouvrement (20) sont fixées sur les brides inférieures.

8. Plancher intermédiaire selon la revendication 6 ou 7, **caractérisé en ce qu'**il comprend des premières tôles ondulées (212a) rigidement fixées à la surface inférieure de la dalle de surface (10), dans lequel on trouve au moins une rainure débouchant vers la dalle de surface et des secondes tôles ondulées (212b) rigidement fixées à la surface inférieure de la dalle de surface (10), dans lequel on trouve au moins une rainure s'ouvrant à distance de la dalle de surface et lesquelles secondes tôles ondulées recouvrent au moins partiellement les premières tôles ondulées.

9. Plancher intermédiaire selon la revendications 6 ou 7, **caractérisé en ce qu'**il comprend des premières tôles ondulées (12a) rigidement fixées sur la surface inférieure de la dalle de surface (10), dans lesquelles tôles ondulées, on trouve des rainures (24a, 24b) et des secondes tôles ondulées (12b) fixées au-dessous des premières tôles ondulées, dans lesquelles secondes tôles ondulées, on trouve des rainures (24a, 24b), les rainures desquelles tôles ondulées sont sensiblement parallèles et alignées avec les rainures des premières tôles ondulées, suite à quoi les premières et secondes tôles ondulées sont séparées les unes des autres par des amortisseurs souples (72) et des planches de recouvrement (20) se fixent aux secondes tôles ondulées.

10. Plancher intermédiaire selon l'une quelconque des revendications 1 à 9, **caractérisé en ce que** la dalle de surface (10) est une dalle en béton.

11. Plancher intermédiaire selon l'une quelconque des revendications 1 à 10, **caractérisé en ce que** la paroi de séparation (18, 88, 90, 118, 218) est fixée sur la dalle de surface (10) avec une fixation qui forme un effet composite.

12. Plancher intermédiaire selon l'une quelconque des revendications 1 à 11, **caractérisé en ce que** dans le premier creux de bord (30a), on trouve un trou d'alimentation (60) pour l'entrée de l'air et dans le second creux de bord (30y), on trouve un creux d'échappement (66) pour la sortie de l'air.

13. Procédé pour faire circuler l'air dans un plancher intermédiaire, dans lequel on trouve un premier creux de bord (30a), un second creux de bord (30y) et au moins un creux intermédiaire (30b, 30c) entre le premier et le second creux, lesquels creux de bord et creux intermédiaires sont sensiblement parallèles et des creux adjacents ont une paroi de séparation commune (18, 88, 90, 118, 218), dans lequel procédé, l'air part à l'intérieur du plancher intermédiaire dans le premier creux de bord et sort du plancher intermédiaire par le second creux de bord, **caractérisé en ce qu'**à l'intérieur du plancher intermédiaire, l'air part d'un creux vers le creux adjacent par des trous (26) dans lesdites parois de séparation communes sensiblement sur toute la longueur du creux.

14. Procédé selon la revendication 13, **caractérisé en ce que** l'air chaud circule dans le plancher intermédiaire afin de chauffer la zone d'habitation définie par le plancher intermédiaire.

15. Procédé selon la revendication 13, **caractérisé en ce que** l'air froid circule dans le plancher intermédiaire afin de rafraîchir la zone d'habitation définie par le plancher intermédiaire.
